# EUROPEAN PATENT APPLICATION

(11) **EP 1 052 499 A1**
(43) Date of publication of application: **15.11.2000**
(21) Application number: 99109634.8
(22) Date of filing: 14.05.1999
(51) Int. Cl.: G01N 21/65

(54) **Method and device for the Raman spectroscopic analysis of black plastics**

(71) Applicant: Sony International (Europe) GmbH, 10785 Berlin (DE)
(72) Inventor: Zoidis, Evangelos, c/o Sony Int. (Europe) GmbH, 70736 Fellbach (DE); Tomita, Hidemi, c/o Sony Int. (Europe) GmbH, 70736 Fellbach (DE)
(74) Representative: MÜLLER & HOFFMANN Patentanwälte

(57) **Abstract**

The invention concerns a method and a device for the analysis of plastics containing light absorbing carbon fillers by Raman spectroscopy. The analysis of such materials with conventional infrared or Raman spectroscopic methods is impeded by the fillers. According to the method of the invention, the sample (6) is irradiated with laser light having a wavelength selected in the range of 640 to 950 nm via a fiber head (4). The fiber head (4) is coupled to a laser (1) by an optical fiber coupling (3). The light reflected from the sample (6) is collected via a fiber head objective (5) having a numerical aperture greater than 0.6. The collected light is transmitted via a fiber coupling (7) to a spectrograph (2) providing spectroscopic data allowing the identification of the polymer type and the presence of certain additives. The working distance between sample (6) and fiber head objective (5) is preferably selected in the range of 5 to 100 mm.

## Description

The invention relates to a method and a device for the Raman spectroscopic analysis of black plastics. Especially, the invention provides a method and a device that can be used for the identification of the polymer type and of the presence of additives, such as halogenated flame retardants, in black plastics.

The technical term "black plastics" denotes, in the context of this invention, plastics comprising carbon fillers. Carbon fillers, such as e.g. carbon black, are commonly used as an additive in the field of plastics production and give a dark or black color to the respective products. The amount of carbon fillers added to the polymeric products depends on the actual use thereof. In general, black plastics can have a content of carbon fillers of up to 20 wt.% and higher. In most cases, however, the content will be in the range of 0.1 to 2 wt.%.

Plastics are commercially used since 1869. In the year 1994, the world plastics production amounted to about 113 million tons (Kunststoffe 85, 1761 (1995)). The outstanding commercial success of this material may be attributed to e.g. the low costs of the raw material, the high durability and the versatility of use.

However, there is one major disadvantage of the widespread use of plastics: Significant amounts thereof will finally end up as plastic waste. Plastics are almost fully resistant to biological degradation so that the disposal of increasing amounts of plastic waste on garbage dumps finally may result in a collapse of waste disposal systems in many industrialized countries.

On the other hand, the burning of plastics (comprising e.g. chlorinated compounds) in incinerating plants as one possibility to solve the above waste disposal problem may result in the release of substantial amounts of hydrochloric acid and even of dioxines into the environment, rendering this solution ecologically unacceptable. Finally, the development of biodegradable plastics is still in its infancy.

Thus, recovery of plastics, especially of post-consumer plastics, in a recycling process has become an important issue of research and development in recent years. Thereby it has become clear that the commercial use of recovered mixed plastics (i.e. plastics of different polymer types) is quite limited, especially due to the unpredictable and unreproducible chemical and physical characteristics of such mixtures. In contrast, it is expected that recovered pure plastics (i.e. plastics mainly consisting of one single polymer type) can replace newly produced plastics to a substantial and increasing amount.

However, the further development of plastic recycling will strongly depend on economic factors and, especially, on the price of recovered plastics which, in turn, depends on the costs of the sorting process necessary to obtain pure plastics (pure in terms of the homogeneity of the polymer type) from a mixture of post-consumer plastic waste.

Therefore, there is a strong need for a cost-effective process for sorting mixed plastics into batches of plastics of only one or a few selected polymer types, such as polyethylene, polyethylene terephthalate, polyvinylchloride, polystyrene, and so on.

Some sorting techniques known in the art such as density-sorting, electrical-sorting, magnetical-sorting or size-sorting are not based on chemical but on physical characteristics of the plastic material so that a sorting according to the polymer type cannot be achieved.

Instead, in order to be able to sort by polymer type, it is necessary to chemically analyse the plastics, thereby identifying the sort of polymer making up the plastic product. Thus, identification techniques that are cost-effective when employed in high-throughput post-consumer plastic waste recovery processes on an industrial scale are currently intensively investigated.

Furthermore, for the recovery of chemically pure reusable plastics, it would also be required that a sorting by presence/absence of certain additives comprised in many plastic materials can be performed. Especially, in the course of the sorting process, the presence of ecologically harmful halogenated flame retardants should be identified. Such halogenated flame retardants are commonly used in housings of electronic sets such as television sets, video recorders, computer monitors and in insulating materials used for the insulation of electric cables, cable pits and so on. Examples of halogenated flame retardants are polybrominated diphenyl ethers (PBDE) and tetrabromobisphenol A (TBBA). Thus, an identification technique that can be used for the detection of such additives during the sorting of post-consumer plastic waste on an industrial scale is required.

As a result of the above investigations, several spectroscopic techniques for the identification of polymer types and/or low molecular additives like halogenated flame retardants in plastic products have been described.

Concerning the identification of the polymer type of packaging and household transparent plastics, NIR (near infrared) reflection spectroscopy is known in the art to provide satisfactory results. However, this method cannot be used for the identification of the polymer type of black plastics, because the carbon fillers included therein strongly absorb the infrared radiation (800 nm to 2500 nm), rendering an analysis of such material with this method impossible.

MIR (mid infrared) reflection spectroscopy relies on the effect of direct reflection of infrared light from the sample. With this technique, polymer resins can be identified with acceptable reliability. However, the quality of the results is strongly affected by the presence of contaminants such as dirt, oil, grease or even water on the surface of the sample to be analyzed: Such contaminants increase the absorption, thereby lowering the reflection intensity. Furthermore, this method is highly sensitive to size, geometry and surface roughness parameters of the sample, thus hampering the analysis especially of small, shredded material and of material having a rough surface. Moreover, this method requires an exact positioning of the sample with respect to the optical measuring device. Currently the identification of flame retardents is facing difficulties using this technique.

In sliding spark spectroscopy, a strong discharging current is applied to the sample to generate a sliding spark on the sample surface. This contact technique generates a highly unpleasant acoustic noise requiring a costly isolation of the working area. In addition it is not possible to measure a variety of polymers using sliding sparks.

Similarly, costly isolation of the measuring device is necessary for X-ray fluorescent spectroscopy techniques. Thus, the latter two methods currently tested on the laboratory level are - beyond limitations concerning speed and reliability of the identification process - not suitable for industrial processes in an open working environment.

Finally, destructive techniques such as mass spectroscopy, laser induced emission spectroscopy and pyrolysis MIR have been investigated. Mass spectroscopy has the disadvantage of long acquisition times (up to one minute) and a low separation effect and will be difficult to automize on an industrial level.

Pyrolysis MIR cannot identify flame retardants. Furthermore, pyrolysis of plastics may result in the release of dioxines.

Recently, the use of Raman spectroscopy for the analysis of plastics has been investigated. Raman spectroscopy is, in view of the underlying physical principles, a complementary technique to infrared spectroscopy. In the international patent application WO 98/19800, a method for rapid sorting of materials by polymer type is described, comprising the steps of conveying said materials to the measuring device, irradiating the material with light from a laser diode to induce Raman emission, collecting the reflected light, performing a spectroscopic analysis of the collected light to determine its Raman spectrum, comparing said Raman spectrum with a database of spectra of known polymer types in order to identify the polymer type of the sample and sorting the material according to the polymer type identified.

The Raman identification system described in WO 98/19800 has four main components: A laser diode, a probe head, a spectrograph including a spectroscope and a charge-coupled device detector, and a microprocessor based controller.

In the preferred embodiment described in WO 98/19800, the center wavelength of the laser is 785 nm and the preferred focal length of the collection lens is 35 mm. By using a collection lens with a focal length of 150 mm, the system was substantially insensitive to sample positioning over a 12 mm range.

However, the method described above has the disadvantage that the polymer matrix of black plastics cannot be identified with sufficient reliability. Furthermore, it is not possible to identify flame retardants in black plastics.

In view of the above, it is a primary object of the invention to provide a method for the analysis of black plastics which can be employed for the simultaneous identification of the polymer type and of the presence of additives such as halogenated flame retardants in black plastics. Furthermore, this method should be based on an analytical technique that is non-destructive and does not require a physical contact between the sample and the measuring device. In addition, the method should be insensitive to size, geometry and surface roughness of the sample and should not require long acquisition times, thus being usable in high-throughput sorting processes for the recovery of post-consumer plastics on an industrial scale.

Furthermore, it is an object of this invention to provide a device for the above simultaneous identification of the polymer type and additives in black plastics, wherein this device can be employed in high-throughput sorting processes for the recovery of post-consumer plastics on an industrial scale.

According to the invention, there is provided a method for the analysis of black plastics by Raman spectroscopy comprising the steps of (a) irradiating black plastics with monochromatic laser light via a fiber head, the fiber head being coupled to the laser, which generates said monochromatic laser light, by an optical fiber coupling, (b) collecting light reflected from said plastics by said fiber head via a fiber head objective, (c) leading the collected light to a spectroscope via an optical fiber coupling and (d) performing spectroscopic analysis of the collected light to determine its Raman spectrum, wherein the wavelength of said monochromatic laser light is selected in the range of 640 nm to 950 nm and the numerical aperture NA of said fiber head objective is selected in the range of 0.6 < NA ≤ 1.

Preferably, the working distance, i.e. the distance between the sample to be analyzed and the fiber head objective, is selected within the range of 5 mm to 100 mm.

In addition, there is provided according to the invention a device for the analysis of black plastics by Raman spectroscopy comprising a laser (1) providing monochromatic light of a wavelength selected in the range of 640 nm to 950 nm, a fiber head (4) coupled to said laser via an optical fiber coupling (3), the fiber head (4) comprising a fiber head objective (5) having a numerical aperture NA within the range of 0.6 < NA ≤ 1.0, and a spectrograph (2) coupled to said fiber head (4) via a fiber coupling (7).

Preferably, the laser is a laser diode.

With the method and the device according to the invention, a Raman spectroscopic analysis even of black plastics can be performed, allowing the simultaneous identification of the polymer type and the presence of additives such as halogenated flame retardants.

In addition, said method and device are especially useful in high-throughput sorting processes for the recovery of post-consumer plastics even on an industrial scale. The acquisition time necessary for obtaining the spectral data is short (within a few seconds) and the method is non-destructive, insensitive to size, geometry and roughness of the plastic products to be analyzed and allows an analysis without physical contact between sample and measuring device. Thus, cost-effective recovery even of black plastics can be achieved. Moreover, the identification of halogenated flame retardants allows a sorting according to the presence or even the type of such additives.

The present invention will be described in further detail by way of examples and embodiments and with reference to the accompanying drawings, wherein
- **Figs. 1a to 1c**: show the Raman spectra of a black high impact polystyrene sample recorded at excitation wavelengths of 633 nm (Fig. 1a), 752 nm (Fig. 1b) and 1010 nm (Fig. 1c), respectively;
- **Figs. 2a and 2b**: show the Raman spectra of black high impact polystyrene samples with (Fig. 2a) and without (Fig. 2b) flame retardant; and
- **Fig. 3**: shows the configuration of a device according to the invention.

The Raman effect is based on an inelastic scattering process of light taking place upon interaction of light with a sample. A single photon interacting with a molecule of the sample is scattered and loses energy during the scattering event. Due to the principle of energy conservation, the difference in energy between the original and the scattered photons corresponds to the excited vibrational quantum energy of the molecule in the sample. The loss of energy results in a higher wavelength/lower energy of the scattered light/photon. Since the energy states of a molecule are quantized and depend on molecular properties, discrete wavelength shifts from the excitation light wavelength will be observed, the respective wavelength shifts and the resulting pattern of wavelength shifts being dependent on molecular properties of the sample. Thus, the resulting vibrational Raman spectrum provides characteristic "finger prints" of the different molecular species making up the sample. By comparing the resulting spectrum with reference spectra of known molecules, said molecular species can be identified.

In the past, Raman spectroscopy using Raman equipment of 1^{st} generation has been used as an identification technique in analytical chemistry on a laboratory scale (see also WO 98/19800). However, this technique has not found broad industrial application. Recently, this situation has changed due to new key technologies by which traditional problems have been overcome:

Firstly, in 2^{nd} generation Raman spectometers small, compact and low power solid state laser diodes have been developped. Secondly, cooled and extremely sensitive CCD (charge coupled device) cameras operating at very low noise levels are now available. Thirdly, holographic notch filters efficiently blocking scattered laser light have been provided. Fourthly, remote sampling can be realized by coupling the sampling site to the detection device by optical fibers. Fifthly, progress has been made in Raman imaging by realizing the confocal principle. Finally, high troughput fast spectrographs have been developped.

Due to the above technologies, a new generation of compact high performance spectrometers is now available. These spectrometers can be devided into two groups having specific features according to the intended field of use. A combination of microscopie devices and new industrial fiber heads could be the basis for a 3^{rd} generation Raman equipment.

On the one hand, there are systems that are using a confocal microscope. Light is directly heating the sample through the microscope and light is collected by the objective of the microscope directly back to the spectrograph. Because of the use of the "confocality principle", good results can be achieved. Best results are achieved by using confocal microscopie measurement conditions with different objectives. However, the working distances have to be very short (in the micrometer range). Thus, this configuration is useful on a laboratory level but not for industrial applications, as explained before.

On the other hand, for applications in which non-contact measurement and a high degree of flexibility of the measuring device are required, configurations using a fiber head instead of the microscope have been developed. The fiber head is coupled to the measuring device and, optionally, to the light emitting device, by a fiber coupling comprising one or more optical fibers.

In view of the above, use of Raman spectroscopy has recently been proposed as a candidate to identify plastics during the process of recovery of post-consumer plastic waste. Based thereon, methods and devices as disclosed in WO 98/19800 (discussed above) have been developped. Such methods and devices have been shown to be useful for the identification of the polymer type of transparent plastics.

Meanwhile, however, it has become clear that the identification of the polymer type in black plastics cannot reliably be achieved by these techniques of the prior art, the underlying reason being assumed as follows:

Conventional Raman spectrometers used in chemistry for analytical purposes are based on argon or krypton ion lasers prividing an excitation wavelength of 488,0 nm, 514,5 nm or 633 nm. In contrast to transparent plastics, black plastics, as understood in the context of this invention, comprise strongly light absorbing fillers - the carbon particles. The strong absorption of visible light by the carbon fillers interferes with the Raman effect, rendering conventional Raman spectroscopy an unsuitable technique for the analysis of black plastics.

Nevertheless, the inventors developed a method to solve the above problem. Firstly, this method comprises the selection of an excitation wavelength within the range of 640 nm to 950 nm, preferably in the range of 650 nm to 900 nm, more preferably in the range of 700 nm to 800 nm and, in an especially preferred embodiment, an excitation wavelength of 752 nm or 785 nm.

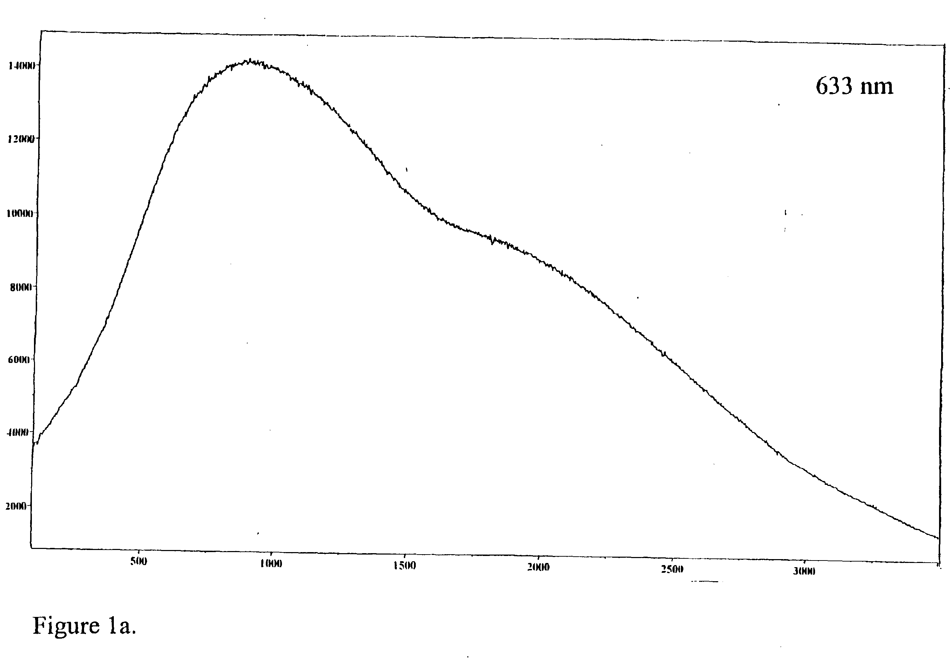

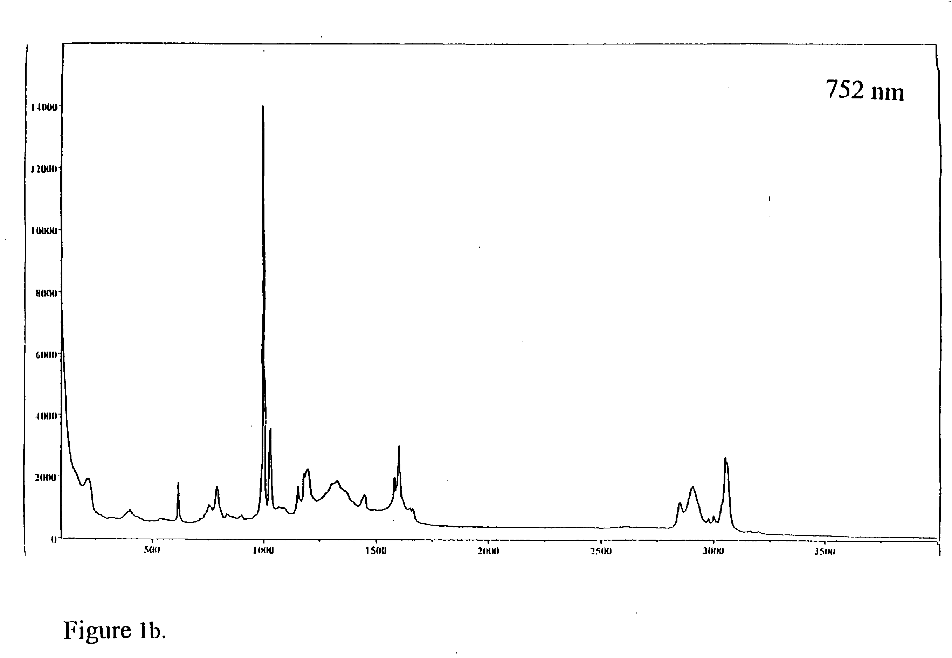

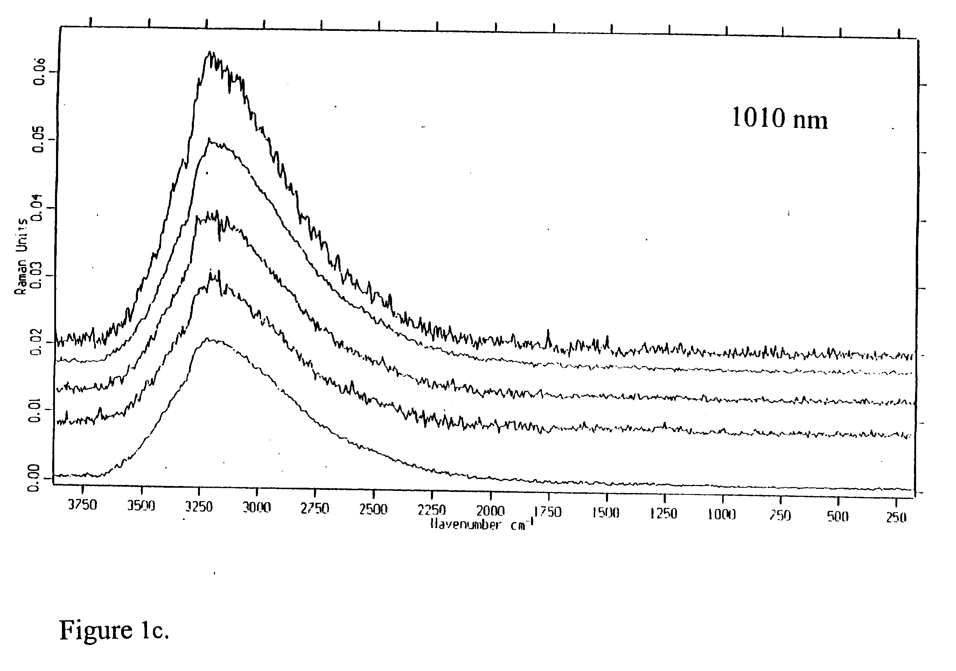

In Fig. 1, the results of an experiment illustrating the excitation wavelength dependency are shown. In this experiment, Raman spectra of a black colored sample made of HIPS (high impact polystyrene), comprising carbon fillers in an amount of < 2 wt.% have been recorded at three different excitation wavelengths. The parameters numerical aperture of the fiber head objective and working distance were set into the ranges as disclosed above. A prefered value of the numerical aperture was 0.90 for an excitation wavelength of 785 nm and 633 nm, respectively.

It should be noted that the Fourier Transformation spectrameter is not using by principle an objective, but directly reflection-transmission lenses and beamsplitters instead.

In Fig. 1a, the Raman spectrum obtained at the excitation wavelength 633 nm is shown. Clearly, no discrete wavelength shifts and no band pattern can be obtained under these conditions. It is assumed that this effect is caused by fluorescence emissions due to electronic transitions. This fluorescence phenomenon results in a strong background overlaying the Raman scattering signal so that no useful information can be extracted from such data.

In Fig. 1c, Raman spectra obtained with five test samples at the excitation wavelength 1010 nm is shown. In this case, a strong and broad signal at about 3200 cm⁻¹ is observed. Although a band pattern allowing the identification of polymer types and/or halogenated flame retardants would be expected to be located far apart in the wavenumber range of 300 to 1700 cm-¹, spectral information cannot be obtained under these conditions, either, because FT (Fourier transformation) analysis of the obtained spectral data is impeded. Thus, FT spectrographs working at an excitation wavelength of about 1000 nm are not suitable for the analysis of black plastics.

In the above case, the appearance of the signal at about 3200 cm⁻¹ can be explained as follows: At an excitation wavelength of about 1000 nm, the sample is heated by the irradiated light, resulting in thermal emissions which give rise to a broad and unspecific band in the resulting spectrum.

In contrast, Fig. 1b shows the spectrum obtained by using an excitation wavelength of 752 nm. In this case, a pattern of well defined bands allowing an identification of the polymer type is obtained. For instance, the strong band at about 1000 cm⁻¹ is known to result from symmetric vibrations of a benzene ring, thus indicating a phenyl group. The band at about 1600 cm⁻¹ results from symmetric stretching vibrations of C-C bonds and the bands at about 3000 cm⁻¹ and in the range of about 1350 cm⁻¹ to 1470 cm⁻¹ from C-H bonds.

From the exact position and intensity of several bands, the type of polymer(s) present in the sample can be determined. Conventionally, this is done by means of a microprocessor comparing the spectral data obtained from the sample to be analyzed with spectral data of various polymer types stored in a database. Programs, algorithms, memory allocations, database organizations, subroutines for baseline correction and normalization and so on are known in the art and described e.g. in WO 98/19800, EP-A-0 764 844, and Spectroscopy *51*, 11(6).

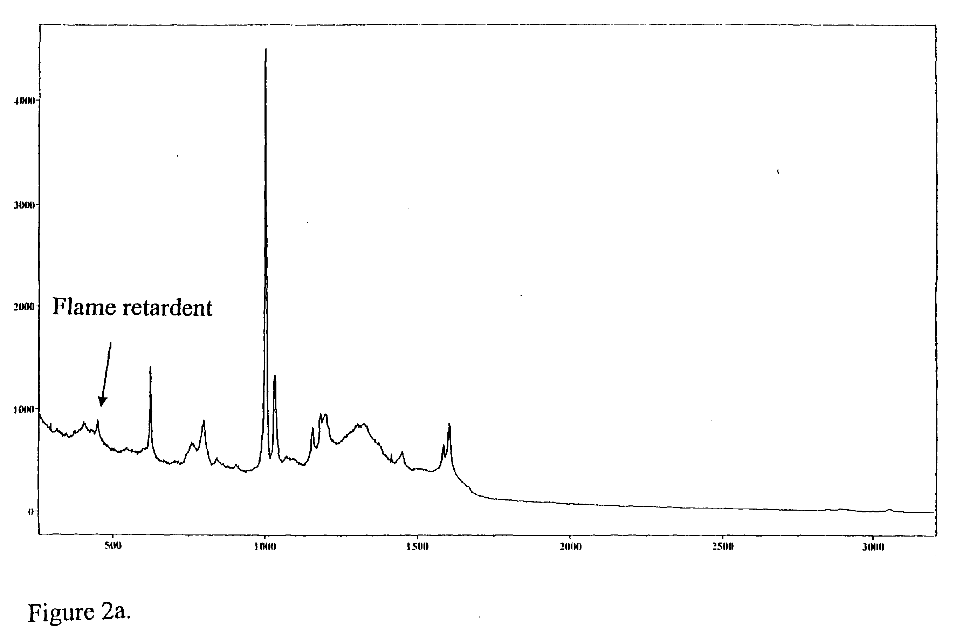

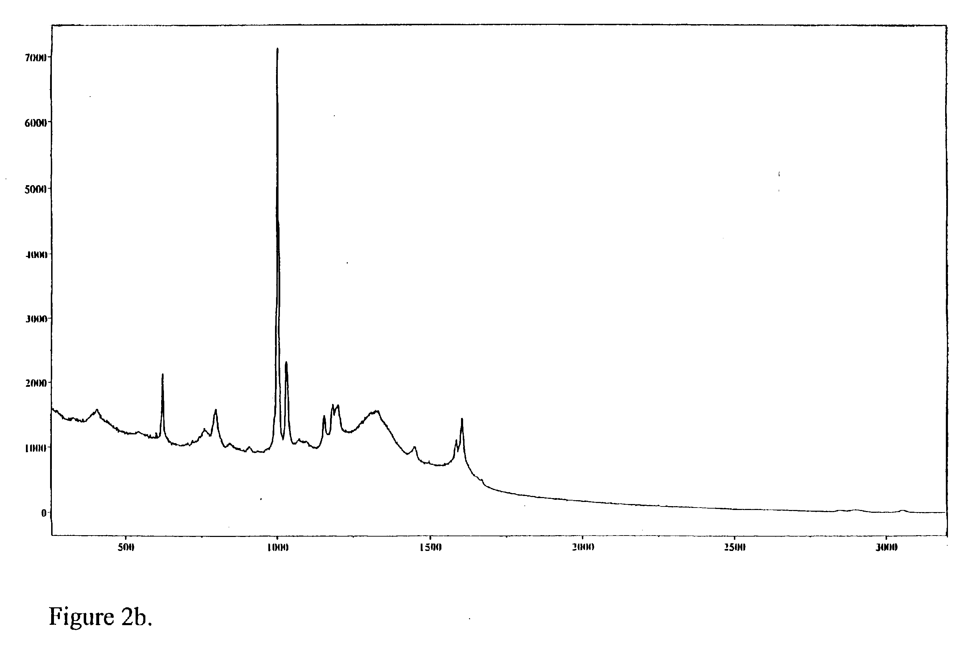

As explained above, many plastics, especially for technical uses, contain halogenated flame retardants as additives. In another experiment it is demonstrated that such additives can be identified even in black plastics by using the method according to the invention. The results are shown in Fig. 2. In this experiment, Raman spectra of black colored samples made of HIPS, comprising carbon fillers in an amount of < 2 wt.% and not containing a halogenated flame retardant (Fig. 2a) or containing about 10 wt.% of the halogenated flame retardant PBDE (Fig. 2b) have been recorded at the same wavelength and optical parameter conditions as in the experiment before.

Clearly, the spectra shown in Fig. 2a and 2b differ only in the wavenumber range of below 500 cm⁻¹. The additional low frequency vibration band seen in Fig. 2b in this range can be assigned to C-Br stretching vibrations, the C-Br group being part of the polybrominated biphenyl ether.

It should be noted that with the method according to the invention, molecular vibrational features resulting from heavy molecules (molecular weight > 200), such as PBDE, and appearing at low modulation frequencies can be detected. In contrast, it is technically difficult to detect such bands with conventional MIR spectroscopy. Moreover, halogens are highly polarizable resulting in a stronger activity in Raman spectra rather than in IR spectra where the modulated quantity is the dipole moment and not directly the molecular polarizability.

Thus, by evaluating the low frequency range of between 150 cm⁻¹ and 1800 cm⁻¹ in Raman spectra obtained according to the method of the invention, the presence of halogenated flame retardants can be identified even in black plastics and more reliably than by e.g. IR spectroscopy. It should be noted that almost all common used flame retardents in plastics are showing vibrational bands in this frequency range.

Furthermore, the inventors found that it is critical to select the numerical aperture of the fiber head objective within a certain range. Thus, a numerical aperture of greater than 0.6, preferably in the range of 0.7 to 1.0, more preferably in the range of 0.8 to 1.0 and most preferably in the range of 0.9 to 1.0 has to be used in the method according to the invention.

In one experiment, a state of the art device employing a fiber head objective having a numerical aperture of 0.55 and equipped with fiber optics for non-contact measurements (fiber head objective X 50, lense f40, average laser power < 30 mW, measurement time > 60 s, gratings 1800 and 600 lines/mm, detector: CCD 1150 x 300, spectrograph aperture ratio F/2, focal length 150 mm/Czerny type, resolution 5-8 cm⁻¹, fiber optics 100 µm) has been used. Even at the optimal wavelength of 785 nm only 20 % of the test samples could be identified (total number of samples used 20, consisting of 5 different polymer types with and without flame retardents). This rate could be improved to more than 80% by selecting a numerical aperture of greater than 0.6. For example, a numerical aperture of 0.8 yields to a rate of 80%.

With a wavelength in the above range and a fiber head objective having a numerical aperture greater than 0.6, a working distance in the range of 5 mm to 100 mm, preferably in the range of 20 mm to 50 mm, was found to give particularly good spectroscopic data which allow the identification of polymer types and of the presence of certain additives.

When realizing the method of the invention, aside from the selection of a suitable excitation wavelength and fiber head objective aperture, additional parameters should be taken into consideration for obtaining optimal results:
The fiber coupling which optically couples the fiber head objective to the spectrograph can be a mono fiber (a single fiber) or a multi fiber (bundle of several fibers). Moreover, the fiber or fibers can be of the mono-mode or multi-mode-type. Additional parameters are the fiber diameter, the optical aperture of the fiber and the background of the fiber medium.

Optical fibers having diameters between 5 nm and 800 nm and an aperture of about 0.2 to 0.3, depending on the wavelength, are known in the art. Bundles of many single fibers or single fibers with large diameter (multimode fibers), e.g. 250 µm, have the advantage that they can capture a lot of scattered light. In contrast thereto, single fibers with small diameter (monomode fibers), e.g. 8 µm, have less internal losses.

The selection of an appropriate fiber coupling configuration primarily depends on the configuration of the devices to which they are connected, i.e. the fiber head and the spectrograph. In general, it should be taken into consideration that the amount of light collected after reflection from the sample and to be coupled into the optical fiber increases with core diameter and numerical aperture. Fiber head alignment tolerances also increase with fiber core diameter, so it is advantageous to use the largest collection fiber that the spectrograph can efficiently handle.

In most experiments, good results were obtained with fibers having a diameter within the range of 50 µm to 200 µm.

Inside the fiber head, there is an optical arrangement that serves to couple the collected scattered light from the objective back to the fiber optic and ensures by the use of special holographic filters that the laser light is blocked out exactly at the excitation wavelength, thereby preventing that this light enters the fiber optic back to the spectrograph. The scattered Raman intensity is in the order of 1.000.000 times less than the excitation laser intensity. Arrangements serving these functions are known in the art. An example can be seen in WO 98/19800.

The spectrograph may be any spectrograph suitable for Raman spectroscopic analysis and, especially, a Czerny-Turner- or axial transmission spectrograph.

It has been found that the use of a low focal length spectrometer, in combination with the selection of an appropriate excitation wavelength and objective lense/fiber head collection optics described above, is especially suitable to solve the problem of the invention. More specifically, a focal length of the spectrograph of 100 mm to 300 mm and, in particular, of about 150 mm is preferred.

Moreover, it has been found that the use of a spectrograph having an optical aperture of lower than F/2 (photographic aperture F/N; N = 1/(2 tg Θ); Θ = aperture angle), preferably between F/2 and F/1, e.g. F/1.4, provides for particularly good results.

A low photographic aperture provides for higher optical throughput and more efficient light delivery from the aperture of the optical fiber to the detector. A spectrograph having a large focal length cannot effectively deliver the light from the optical fiber to a target as small as the CCD pixels. Besides, this allows a reduction of the weight and dimensions of the spectrograph.

Furthermore, upon selecting aperture (entrance slit width) and focal length of the spectrograph as well as dimension of the detector, the sort of fiber coupling should be taken into account. Thus, if the collected light is coming back in a fiber of a diameter of e.g. 400 µm and the entrance of the spectrograph is in the range of 50 to 100 µm, it will be difficult to get the whole amount of light into the spectrograph. On the other side, when using a mono mode fiber with small diameter (< 10 µm), intensity collected from the sample will obviously get lost. Moreover, if this is brought back to the entrance slit of the spectrograph, mechanical adjustment at the coupling interface will be very critical. This is one reason why mono mode fibers are mostly used in connection with arrangements using a microscope instead of a fiber head.

One solution to optimize the coupling of the spectrograph to the light collection optics is to use an optical fiber comprising a cylindrical arrangement of many fibers at the collection point at the sample and to align the fibers at the entry to the spectrograph into a one dimension line arrangement to fit the entrance slit having dimensions of few millimeters times a varying width of typically 300 µm to 30 µm in order to achieve a better resolution.

Next, it should be taken into account that the definition of the operating wavelength region, the dispersion and the resolution of the entire system is determined to a decisive extent by the spectrograph grating. The selection of the grating depends on the wavelength range of interest and the desired dispersion to be achieved. The dispersion has to be matched to the focal length of the spectrograph and the size of the CCD detector. The lack on angular dispersion due to the small dimensions of the spectrograph, in case of a 150 mm focal length for example, can be compensated by the choice of the appropriate grating. The dispersion has to be as large as possible.

It is state-of-the-art to use more than two reflective gratings within one spectrograph in order to cover a broad spectral frequency range. These have to be replaced manually or by using a step driving motor simply to change the reflection angle of the grating each time in order to measure the individual frequency range. This brings about the disadvantages that longer data acquisition times become necessary and, by using such mechanical moving parts, a potential source of having misalignment and failure in the spectrograph has to be accepted. Another disadvantage is that the different measured ranges have to be matched together using software tools. Using this fitting procedure, which needs additional time to perform, the result will be not always a perfect matching in the different overlapping frequency areas.

Furthermore, the use of one volume holographic transmission grating instead of reflection gratings is known in the art. This grating can overcome the above mentioned disadvantages by stacking two spectral regions on top of each other at the CCD detector simultaneously. However, within this concept, firstly, a completely different spectrograph design is needed (Axial Transmittance instead of Czerny-Turner) and, secondly, part of the two dimensional CCD array detector is allocated with extra information. In that case the detector space is limited for other applications, as for example simultaneous multi-head measurements.

It has been found by the inventors, that in the context of the method of the invention, the wavelength range of interest can be defined to be limited between wavenumbers of from about 100 cm⁻¹ to 3200 cm⁻¹, which is sufficient for almost all organic compounds and polymers. Thus, the above disadvantages can be overcome by the use of only one reflection holographic grating which has high efficiency and high dispersion over the whole range and a low grating density of 150 to 600 lines/mm. Instead of holographic gratings also normal diffraction gratings can be used.

The resolution achieved under these condition, although reduced, is sufficient for the intended use of the method, as it has been found by the inventors that the spectroscopic identification of plastics does not generally request high spectral resolution. Specifically, a spectral resolution range of about 6 to 12, more specifically 7 to 10 wavenumbers (cm⁻¹) has been found to be sufficient for the identification of most polymers and additives.

In Table 1, the covered range of wavenumbers and the dispersion obtained with different grating densities is shown. It should, however, be noted that the results depend upon excitation wavelength and CCD-detector pixel size.

**Table 1**

| grating lines/mm | covered range (cm⁻¹) | dispersion (A/mm) |
|---|---|---|
| 1800 | 300 | 20 |
| 1200 | 600 | 35 |
| 600 | 1400 | 65 |
| 300 | 2700 | 125 |
| 150 | 3500 | 240 |

As shown in Table 1, a grating density of 150 to 600, preferably of 150 to 300 lines/mm may be sufficient to perform the method according to the invention with only one grating within the spectrograph.

Finally, examples of CCD detectors are 2048 element linear silicon CCD or deep depletion of front illuminated CCD, operating at 20°C or 70°C.

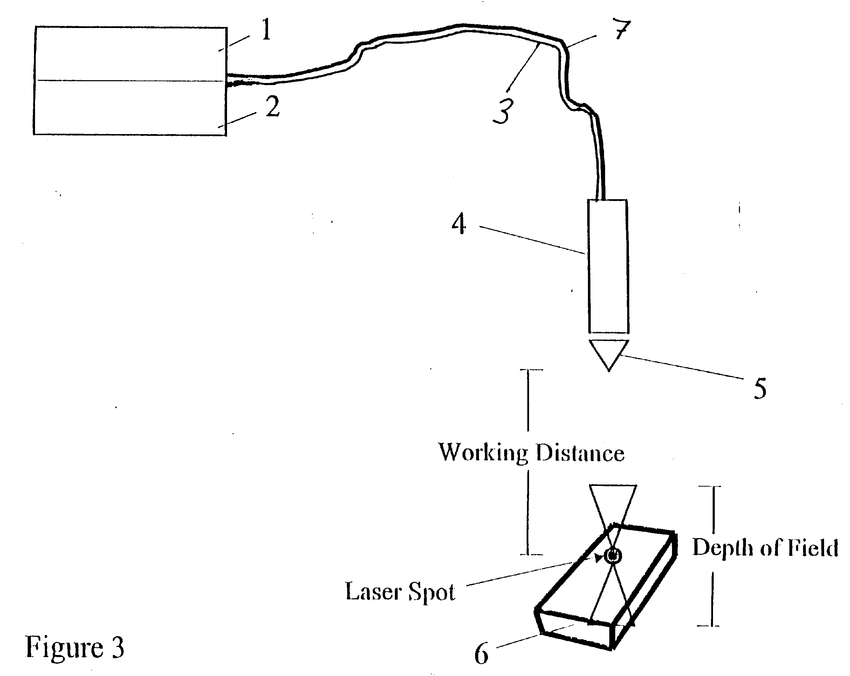

An example for a measuring device that can be used in the method according to the invention is shown in Fig. 3. Firstly, this device comprises a laser (1) for the generation of monochromatic light, preferably a laser diode. Furthermore, the device comprises a spectrograph (2) for the analysis of the Raman emission after irradiation with said monochromatic light. The spectrograph (2) can be located in the same housing as the laser (1), as indicated in Fig. 3, or can be arranged separately.

As explained above, the monochromatic light emitted by the laser has a wavelength in the range of 640 nm to 950 nm. As shown in Fig. 1b, 2a and 2b, excitation light generated by a laser diode (e.g. a SDL laser diode, 30 mW maximal output power) and having a wavelength of 752 nm gives particularly good results.

The spectrograph (2) may be a conventional spectrograph commonly used for the analysis of Raman emissions. Such a spectrograph comprises a spectroscope which separates light into its spectral components, preferably a spectroscope having a focal length in the range of 100 to 300 mm, more preferably of about 150 mm. The aperture of the spectroscope is preferably selected in the range of F/1 to F/2, more preferably F/1.4.

According to one embodiment of the invention, the spectroscope comprises one grating. In this case, the grating density is preferably selected in the range of 150 lines/mm to 600 lines/mm, more preferably in the range of 150 lines/mm to 300 lines/mm. The resolution may be in the range of 6 cm⁻¹ to 12 cm⁻¹, more preferably in the range of 7 cm-1 to 10 cm-1. Under these conditions, the analysis of a wavenumber range of about 100 cm⁻¹ to 3200 cm⁻¹ with one single grating is feasible.

Depending on the application, one can use a low density grating (below 600 lines/mm), with low resolution for example preferably around 10 cm⁻¹ to identify polymers which usually show distinct and broad bands by covering a broad frequency range as mentioned 100 cm⁻¹ to 3200 cm⁻¹ or one can use a higher density grating (above 600 lines/mm) to achieve higher resolution typically down to 4 cm⁻¹ for example in order to measure flame retardents which are usually showing weaker and smaller bands. Of course for the simoultaneous identification of both an intermediate compromise can be found.

Furthermore, the spectrograph comprises a means converting the spectral information into data signals, e.g. a CCD, and a microprocessor based controller processing and analyzing the data signals. Preferably, this controller is suitably equipped for performing an identification of polymer types and/or additives by comparing the data obtained from the spectral information - optionally after application of base line correction and normalization routines - with respective data comprised in a data base. Respective hardware and software suitable for this purpose is commonly known in the field of analytical spectroscopy.

Furthermore, the device shown in Fig. 3 comprises a fiber head (4) which has two functions: Firstly, the fiber head (4) receives, via an optical fiber (3), the light generated by the laser (1) and irradiates the light, via a fiber head objective (5), onto the sample (6). Secondly, the light emitted from the sample (6) after irradiation is collected by the fiber head objective (5) in the fiber head (4) and passed into an optical fiber coupling (7) connecting the fiber head (4) to the spectrograph (2). The fibers 3,7 are guited into a single fiber supporting shell (8).

Thus, the fiber head objective (5), especially comprising a so-called "macro lens", serves to focus the monochromatic light onto the sample (6) and to recollect the light emitted from the sample (the Raman emission). According to the invention, the fiber head objective (5) has a high numerical aperture NA, i.e. 0.6 < NA ≤ 1.0, more preferably 0.7 ≤ NA ≤ 1.0, more preferably 0.8 ≤ NA ≤ 1.0 and most preferably 0.9 ≤ NA ≤ 1.0.

As mentioned above, the fiber head (4) is connected to the source of monochromatic light (e.g. the laser diode) and to the spectrograph (2) by optical fiber couplings (3) and (7). Said optical fiber couplings (3) and (7), optionally provided as a single bundle, as shown in Fig. 3, have the function of guiding the monochromatic light to the fiber head (4) and of directing the collected scattered light emitted by the sample (6) back to the spectrograph (2). The optical fibers making up the fiber couplings (3) and (7) can be of the mono-mode or multi-mode type and can be mono fibers or multi fibers. The fiber diameter of the optical fiber or fibers coupling the fiber head to the spectroscope is preferably in the range of 50 µm to 200 µm.

As already described above, the fiber head comprises optical arrangements to direct the laser light onto the sample and to couple the collected scattered light from the objective back to the fiber optic. By use of holographic filters, the laser light is efficiently blocked out at the excitation wavelength. Fiber head arrangements are known in the art and are shown e.g. in WO 98/19800.

The size of the fiber head can be relatively small, e.g. not greater than 20 cm in length and about 3 cm in diameter. Such a small size optical fiber head can be installed in recognition and sorting devices as required by the actual arrangement of measuring device and conveyor means supplying the samples to be analysed. The fiber head may be attached to a fixed or flexible support or may even be maneuvered manually, as a "hand holded" device.

The small size of the fiber head and the spatial separation of the fiber head on the one side and the light generation device and spectrograph on the other side, as shown in Fig. 3, makes it possible to control the working distance between sample and measuring device in the above preferred range of 5 mm to 100 mm. Thus, with a device as described above, the method according to the invention can successfully be employed not only on a laboratory scale but even in industrial high-throughput sorting procedures for the recovery of post-consumer plastics.

The device according to the invention can be employed in conventional sorting systems comprising, in addition to the above device, e.g. a feed conveyor for conveying the material to be sorted and a sorter performing sorting according to the data provided by the measuring device.

The working distance is preferably selected in the range of 5 mm to 200 mm, more preferably in the range of 20 mm to 50 mm. However, larger working distances might become feasible as detection devices having higher sensitivities for Raman emissions than the spectroscopes commonly used in the present state of the art become available.

As explained above, conventional Raman spectroscopic identification techniques are unsatisfactory when used for the analysis of black plastics. In view of the results of the present invention, an explanation for this effect might be as follows: The carbon fillers used for the production of black plastics strongly absorb the excitation light, thus not allowing the light to penetrate into the sample. Consequently, the light will be mainly absorbed on the surface and the depth of the field (i.e. the penetration volume in the sample) will be limited to the area determined by the laser spot size, which will be in the order of few micrometers. If the focal spot size is very small (1 to 5 µm) and the laser power high (> 50 mW) and depending on the working distance, burning will occur at the focal spot. The low depth of the scattering field (less than 1 µm) has the additional consequence that, for the detection of Raman scattered light, a very exact sample positioning becomes necessary, thus requiring undesirable time-consuming mechanical adjustments.

If, in contrast, the parameters excitation wavelength and numerical aperture of the fiber head objective are selected within the ranges disclosed above, an appropriate depth of the field will be achieved. The depth of the field depends on the characteristics of the objective and of the sample. It has been found by the inventors that the depth of the field, schematically shown in Fig. 3, should be in the range of about ± 2 mm to ± 5 mm with respect to the focal spot.

In addition, by using the method and device according to the invention, a relatively large focal spot size in the range of 10 µm to 200 µm and a relatively low laser power on the sample surface, i.e. lower than 200 mW and, especially, in the range of 10 mW to 200 mW, is effected. That means, that even if a I Watt laser in used at a working distance of 40 mm, for example, the power on the sample surface does not have to exceed 200 mW. Also a high power laser diode up to 5 Watt can be used at a suitable working distance, for example.

The results of an experiment showing the effect of the use of objectives having different numerical apertures on the parameters working distance, laser spot diameter and depth of the optical field are shown in Table 2.

**Table 2**

| Focal length (f) (Lense) NA (Objective) | working distance (mm) | laser spot diameter (mm) | depth of the optical field (mm) |
|---|---|---|---|
| f=40 & NA=0.08 | 37 | 0.25 | 10 |
| x 10 with NA=0.25 | 7 | 0.10 | 2 |
| x 50 with NA=0.55 | 5 | 0.02 | 0.1 |
| x 100 withNA=0.95 | 2 | 0.001 | 0.01 |
| NA = numerical aperture | | | |

Thus, it may be assumed that with the method and the device of the invention, a depth of the optical field, a focal laser spot size and a laser power on the sample surface can be realized which render it possible to obtain Raman spectroscopic information even from black plastics, independent of size, geometry and surface roughness of the sample, and which do not cause a burning of the sample during the irradiation. The spectroscopic data allows the identification of the polymer type as well as the detection of additives such as halogenated flame retardants in black plastics.

## Claims

1. A method for the analysis of plastics containing carbon fillers by Raman spectroscopy comprising the steps of
a) irradiating said plastics with monochromatic laser light via a fiber head, said fiber head being coupled to the laser generating said laser light by an optical fiber coupling;
b) collecting light reflected from said plastics by said fiber head via a fiber head objective;
c) leading the collected light to a spectrograph via an optical fiber coupling and
d) performing spectroscopic analysis of the collected light to determine its Raman spectrum, wherein the wavelength of said monochromatic laser light is selected in the range of 640 nm to 950 nm and the numerical aperture NA of said fiber head objective is selected in the range of 0.6 < NA ≤ 1.

2. The method according to claim 1, wherein the working distance between the sample and said fiber head objective is selected within the range of 5 mm to 200 mm.

3. The method according to claim 1 or claim 2, wherein said fiber coupling connecting said fiber head with said spectrograph comprises one or more mono-mode or multi-mode optical fibers.

4. The method according to any of claims 1 to 3, wherein said spectrograph has a focal length in the range of 100 to 300 µm and an aperture in the range of F/1 to F/2.

5. The method according to any of claims 1 to 4, wherein the laser power effected on the sample surface is in the range of 10 mW to 200 mW.

6. A device for the analysis of plastics containing carbon fillers by Raman spectroscopy comprising a laser (1) providing monochromatic light of a wavelength selected in the range of 640 nm to 950 nm, a fiber head (4) coupled to said laser via an optical fiber coupling (3), a fiber head objective (5) having a numerical aperture NA within the range of 0.6 < NA ≤ 1.0, and a spectrograph (2) coupled to said fiber head (4) via a fiber coupling (7).

7. The device according to claim 6, wherein said laser is a laser diode.

8. The device according to claim 6 or claim 7, wherein said fiber coupling (7) which couples said spectrograph (2) to said fiber head (4) comprises one or more fibers having a diameter within the range of 50 µm to 200 µm.

9. The device according to any of claims 6 to 8, wherein said spectrograph comprises one grating.

10. The device according to claim 9, wherein said grating has a grating density in the range of 150 to 600 lines/mm.

11. The device according to any one of claims 6 to 10, wherein said laser is fomed by a high power laser diode having an output up to 5 Watt.

12. Use of the device according to any of claims 6 to 11 in a system for sorting plastics.
